# EUROPEAN PATENT APPLICATION

(11) **EP 3 839 862 A1**
(43) Date of publication of application: **23.06.2021**
(21) Application number: 19218691.4
(22) Date of filing: 20.12.2019
(51) Int. Cl.: G06Q 30/02

(54) **A SYSTEM AND METHOD FOR DIGITAL CONTENT MANAGEMENT AND SHARING**

(71) Applicant: UPM Raflatac Oy, 33310 Tampere (FI)
(72) Inventor: Manninen, Samuli, 00180 Helsinki (FI); Poukka, Sami, 33430 Vuorentausta (FI)
(74) Representative: Berggren Oy

(57) **Abstract**

The invention relates to digital content management and sharing. In accordance with an embodiment, there is provided a method comprising receiving from a communication device a request comprising information related to a product, a requesting consumer, and a requested operation, wherein the information related to the product is obtained on the basis of a machine readable code associated with the product; examining the received information to determine whether the requested operation is permissible for the requesting consumer; and if the examination reveals that the requested operation is permissible for the requesting consumer, the method further comprises at least determining if the requested operation is for a targeting consumer or for the requesting consumer. If the requested operation is for the targeting consumer, the method further comprises determining at least one condition for performing the requested operation by the targeting consumer; creating an initiating message; including the at least one condition to the initiating message; and sending the initiating message to a communication device of the targeting consumer to initiate the requested operation. If the requested operation is for the requesting consumer, the method further comprises determining at least one condition for performing the requested operation by the requesting consumer; creating a response message; including a link for performing the requested operation to the response message; and sending the response message to a communication device of the requesting consumer.

## Description

### Technical field

There is provided a system and method for digital content management and sharing on the basis of information obtained from physical products.

### Background

Physical products such as bottles of drinks, packages of fragrancies, packages of tissue papers, sweets and other packaged items have labels designed for or by manufactures or brand owners of the items. For example, lemonade bottles may have different kinds of labels depending on the manufacturer of the lemonade and the quality of the lemonade so that consumers can more easily distinguish the product from other products.

The package of the item may also comprise a visual and machine readable, unique code, such as a bar code or so-called QR code. The code itself may include some details of the product and/or may contain a link to a database from which more information about the product can be obtained. Hence, a consumer may capture an image of the code by a communication device such as a smart phone, wherein an application in the communication device interprets the image to find the code and to interpret it so that an address of the link embedded in the code can be revealed and information may be retrieved from the indicated address. It may also be possible that the communication device sends the scanned image to an entity which is capable to examine the image to find the code and interpret it. Hence, information may be retrieved from the address indicated by the code and the entity may send the retrieved information to the communication device. The entity may be a server or another computing device in the internet, for example.

In today's world, brand and content owners are looking ways to distribute digital content in new ways. One way of doing this is to share digital content with users on the basis of information obtained from physical products e.g. the way described above.

For companies selling physical products, it would be beneficial to be able to restrict the access to valuable digital content from their products to time, location or amount of bought products. One problem is to manage how, when and how long users have access to that content and with whom the users can share the content.

### Summary

One aim of the present invention is to solve the problem of digital content management and sharing on the basis of information obtained from a unique code attached with a physical product.

In accordance with an embodiment, a consumer uses a communication device or other device capable of image capturing to capture an image of a visual code in a label of a product. The captured image is examined by an application executed in the communication device to find out the code. When the code has been found, the code is interpreted to find information of a link, i.e. a network address of a gateway where digital content management related to the product is administrated. The communication device contacts the gateway on the basis of the revealed network address e.g. by sending the unique code and information of the product and the consumer by whom the request is transmitted to the gateway. The gateway comprises or is in a communication connection with a managing server which contains among other things information of registered users (consumers). The managing server manages operations which can be performed on the basis of the request. These operations will be explained in more detail in the detailed description.

In addition to or instead of the visual code, the code may be implemented using another kind of machine readable code, such as a code readable by radio communication equipment, a three-dimensional code etc.

In other words, requests regarding content related to products are transmitted from a requesting device to a gateway and further to a managing server which handles the request and when the request is accepted, initiates transfer of a reply to a device where the reply is intended to be transmitted. The device may be the requesting device or it may be another device such as a device of a friend of the requester. It may also be possible that the reply is transmitted to a plurality of devices such as the requesting device and a device/devices of a friend/friends of the requester.

In accordance with an embodiment, the device where the content is delivered is not necessarily the same device which scanned the unique code from the product.

According to a first aspect there is provided a method for digital content management and sharing, the method comprising:
receiving from a communication device a request comprising information related to a product, a requesting consumer, and a requested operation, wherein the information related to the product is obtained on the basis of a machine readable code associated with the product;
examining the received information to determine whether the requested operation is permissible for the requesting consumer; and
if the examination reveals that the requested operation is permissible for the requesting consumer, the method further comprises at least the following:
   if the requested operation is for a targeting consumer, the method further comprises:
      determining at least one condition for performing the requested operation by the targeting consumer;
      creating an initiating message;
      including the at least one condition to the initiating message; and
      sending the initiating message to a communication device of the targeting consumer to initiate the requested operation; or
   if the requested operation is for the requesting consumer, the method further comprises:
      determining at least one condition for performing the requested operation by the requesting consumer;
      creating a response message;
      including a link for performing the requested operation to the response message; and
      sending the response message to a communication device of the requesting consumer.

According to a second aspect there is provided an apparatus for digital content management and sharing comprising:
means for receiving from a communication device a request comprising information related to a product, a requesting consumer and a requested operation, wherein the information related to the product is obtained on the basis of a machine readable code associated with the product;
means for examining the received information to determine whether the requested operation is permissible for the requesting consumer; and
means for initiating the requested operation if the examination reveals that the requested operation is permissible for the requesting consumer, wherein the means for initiating the requested operation are configured to:
   determine, if the requested operation is for a targeting consumer, wherein the apparatus is further configured to:
      determine at least one condition for performing the requested operation by the targeting consumer;
      create an initiating message;
      include the at least one condition to the initiating message; and
      send the initiating message to a communication device of the targeting consumer to initiate the requested operation; or
   determine, if the requested operation is for the requesting consumer, wherein the apparatus is further configured to:
      determine at least one condition for performing the requested operation by the requesting consumer;
      create a response message;
      include a link for performing the requested operation to the response message; and
      send the response message to a communication device of the requesting consumer.

According to a third aspect there is provided an apparatus comprising a processor and a memory, said memory comprising computer code when executed by the processor cause an apparatus at least to perform:
receive from a communication device a request comprising information related to a product, a requesting consumer and a requested operation, wherein the information related to the product is obtained on the basis of a machine readable code associated with the product;
examine the received information to determine whether the requested operation is permissible for the consumer; and
initiate the requested operation if the examination reveals that the requested operation is permissible for the requesting consumer, wherein said memory further comprises computer code when executed by the processor causes an apparatus to initiate the requested operation by:
   determining, if the requested operation is for a targeting consumer, wherein the computer code when executed by the processor causes the apparatus to:
      determine at least one condition for performing the requested operation by the targeting consumer;
      create an initiating message;
      include the at least one condition to the initiating message; and
      send the initiating message to a communication device of the targeting consumer to initiate the requested operation; or
   determining, if the requested operation is for the requesting consumer, wherein the computer code when executed by the processor causes the apparatus to:
      determine at least one condition for performing the requested operation by the requesting consumer;
      create a response message;
      include a link for performing the requested operation to the response message; and
      send the response message to a communication device of the requesting consumer.

According to a fourth aspect there is provided a computer program product for digital content management and sharing comprising computer code when executed by a processor cause an apparatus at least to perform:
receive from a communication device a request comprising information related to a product, a requesting consumer and a requested operation, wherein the information related to the product is obtained on the basis of a machine readable code associated with the product;
examine the received information to determine whether the requested operation is permissible for the requesting consumer; and
initiate the requested operation if the examination reveals that the requested operation is permissible for the consumer, wherein the computer program product further comprises computer code when executed by the processor causes an apparatus to initiate the requested operation by:
   determining, if the requested operation is for a targeting consumer, wherein the computer code when executed by the processor causes the apparatus to:
      determine at least one condition for performing the requested operation by the targeting consumer;
      create an initiating message;
      include the at least one condition to the initiating message; and
      send the initiating message to a communication device of the targeting consumer to initiate the requested operation; or
   determining, if the requested operation is for the requesting consumer, wherein the computer code when executed by the processor causes the apparatus to:
      determine at least one condition for performing the requested operation by the requesting consumer;
      create a response message;
      include a link for performing the requested operation to the response message; and
      send the response message to a communication device of the requesting consumer.

According to a fifth aspect there is provided a managing server for digital content management and sharing comprising:
means for receiving from a communication device a request comprising information related to a product, a requesting consumer, and a requested operation, wherein the information related to the product is obtained on the basis of a machine readable code associated with the product;
means for examining the received information to determine whether the requested operation is permissible for the requesting consumer; and
means for initiating the requested operation if the examination reveals that the requested operation is permissible for the requesting consumer, wherein the means for initiating the requested operation are configured to:
   determine, if the requested operation is for a targeting consumer, wherein the managing server is configured to:
      determine at least one condition for performing the requested operation by the targeting consumer;
      create an initiating message;
      include the at least one condition to the initiating message; and
      send the initiating message to a communication device of the targeting consumer to initiate the requested operation, or
   determine, if the requested operation is for the requesting consumer, wherein the managing server is configured to:
      determine at least one condition for performing the requested operation by the requesting consumer;
      create a response message;
      include a link for performing the requested operation to the response message; and
      send the response message to a communication device of the requesting consumer.

Some example embodiments are defined in the dependent claims.

In accordance with an embodiment, companies selling physical products are able to restrict access to valuable digital content from their products on the basis of some criteria such as time, location, amount of bought products, user profile, etc.

In accordance with an embodiment, it is possible to limit the access so that the content is only accessible for a certain period of time, at a certain time of day, inside a certain geographical area, outside a certain geographical area, etc.

In accordance with an embodiment, the consumer is allowed to share a link to the content with one or more other consumers wherein they can access the content. The access of the one or more other consumers may also be restricted by some criteria.

In accordance with an embodiment, the system keeps a record of recipients where the links have been shared and/or who has used the link(s).

In accordance with an embodiment, the level of the user who shared the link may also be raised when the receiver of the link utilized the link.

In accordance with an embodiment, the receiver of the link may be assigned some or even all the privileges of the user who shared the link, when the receiver utilizes the link.

### Brief description of the drawings

In the following, several embodiments will be descried in more detail with reference to the appended drawings, in which
- Fig. 1: illustrates an example of a process flow from label preparation and printing to product recycling;
- Fig. 2: illustrates an example of a system for digital content management and sharing on the basis of information obtained from physical products, in accordance with an embodiment;
- Fig. 3: shows a block diagram of a managing server, in accordance with an embodiment;
- Fig. 4a: is a flow diagram of a method for obtaining access to a content on the basis of a code attached with a product, in accordance with an embodiment;
- Fig. 4b: is a flow diagram of a method for sharing a link to other consumer for accessing a content, in accordance with an embodiment; and
- Fig. 4c: is a flow diagram of a method for accessing a content by another consumer on the basis of a shared link from a consumer, in accordance with an embodiment.

### Detailed description

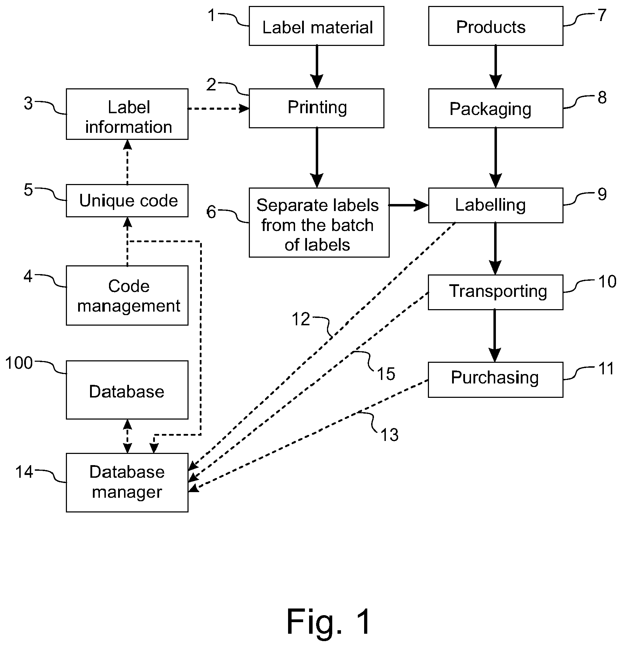

Fig. 1 illustrates an example of a process flow from label preparation and printing to product purchasing and content utilization. In Fig. 1 solid lines illustrate flows of physical subject matter and dotted lines illustrate data flows.

Label material 1 is fed to a printing machine 2 for printing. The label material may have been selected so that it is appropriate for the product to which the label will be attached and also for the printing method and substances therein (e.g. printing powder or ink). The printing machine 2 fetches information 3 to be printed on the label from a code management entity 4, e.g. from a brand owner. The code management entity 4 also provides information for a unique code 5 to be printed on the label. The unique code may be a bar code, a QR code, a Datamatrix code, a Digital Watermark or other visual code, or may be in another non-printable form which may not be visual but another kind of a machine readable code, such as a code encoded in an RFID tag (Radio Frequency Identification) or as an NFC (Near Field Communication) code or as a three-dimensional code, for example. The machine readable code may also be in a form of a combination of two or more different kinds of codes, such as a QR code implemented with an RFID tag. A non-limiting example of the three-dimensional code to be mentioned here is a 3D bar code having protrusions or colours as the third dimension. The visual code may also be called as a human recognizable code and the code which can be read by a device may be called as a machine readable code, which can be visual or non-visual. In accordance with an embodiment, the actual code may become visible or machine readable only in a certain lighting, such as in UV light or infrared light. For the purpose of this text the latter type of code is still considered to be a visual and/or machine readable code.

In accordance with an embodiment, the location of the unique code in the label, especially when the code is not a visual code, is indicated by some visible marking so that a consumer can see where the unique code is in the label. This helps the consumer to capture an image of the code or read the code by some other means, such as by a device capable of communicating with the RFID tag. Reading the unique code by a device will be explained later in this application.

Products 7 are also packaged 8 to a package suitable for the products. For example, liquid substances may be inserted into bottles or cartons.

After printing the labels are forwarded to for example a separation phase 6, where individual labels are separated from the label material by a cutting machine. The individual labels may then be attached with packages of the products by a labelling machine 9. When a label is attached with the package, information related to the product and the unique code is stored 12 to a database, which may be called as a code database 100. This may be implemented so that the labelling machine 9 reads the unique code from the label and sends this information to a database manager 14 in which the information of the unique code and information of the product of that particular package are linked together and stored into the code database 100.

In accordance with an embodiment, the code management entity 4 may have provided information of the generated/selected unique code when it was sent to be attached with a label. Hence, the code database 100 already comprises the unique code and the product information can be attached with the unique code in the code database 100 after the label have been attached to the product. In this embodiment it may be possible to check that the unique code attached with the product actually is a code provided by the code management entity 4.

Information of the product may vary depending on the nature of the product. The information may comprise an indication when the product was produced, indication of the machine which produced the product, the manufacturer of the product, nutrition details of the product, etc. The information may provide access to a further service not directly related to the product. Such service may be a video, game, lottery or something else used to promote the product for consumers and/or the reward the consumer of purchasing the product.

In accordance with an embodiment, the package may have some pre-printed visual elements wherein the labels are added onto the package at the labelling phase.

In accordance with another embodiment, all visual elements of the package and the unique code are printed at the same phase by the printing machine.

The above described examples of attachment of the unique code with the product are only non-limiting examples but also some other ways to attach a unique code with a product may be used.

The products having the unique code are delivered 10 to retail dealers, malls, warehouses or other locations for purchasing 11 by consumers. Information on the location may be provided 15 to the database manager 14 wherein the database manager 14 can link the product, unique code and the retail location together.

When the product have been purchased 11, information of the purchased product may be transmitted 13 to the database manager 14 so that it can update the database to include information that the product attached with the unique code has been purchased.

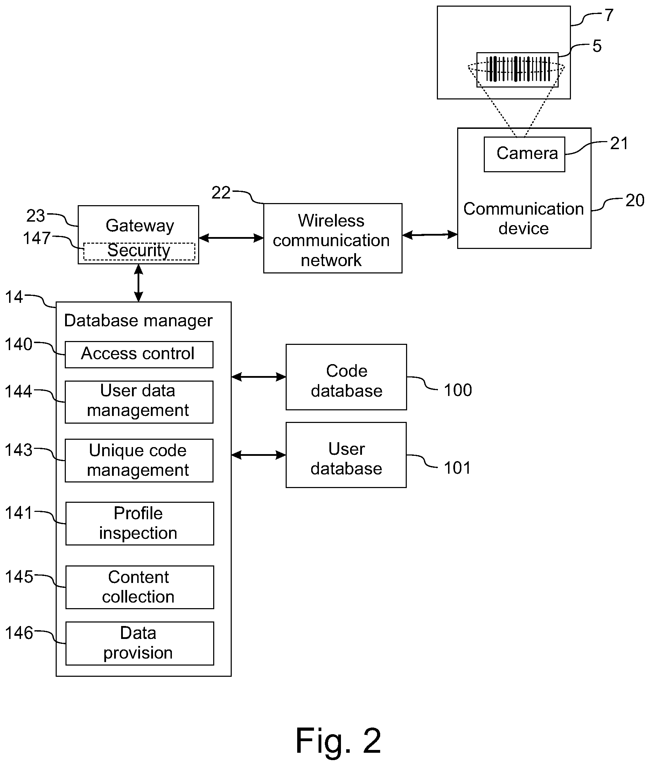

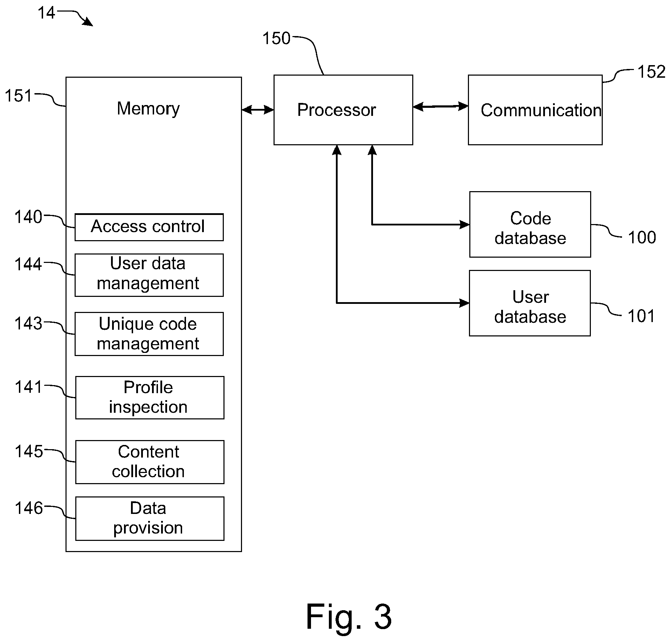

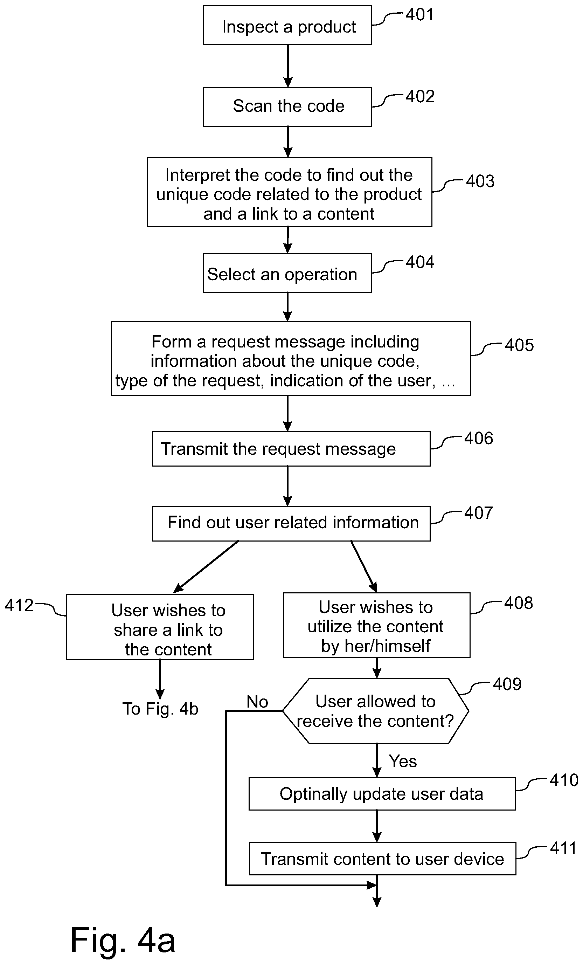

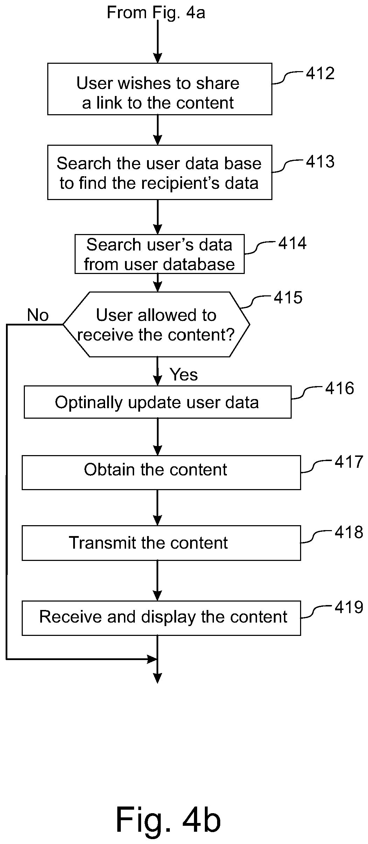

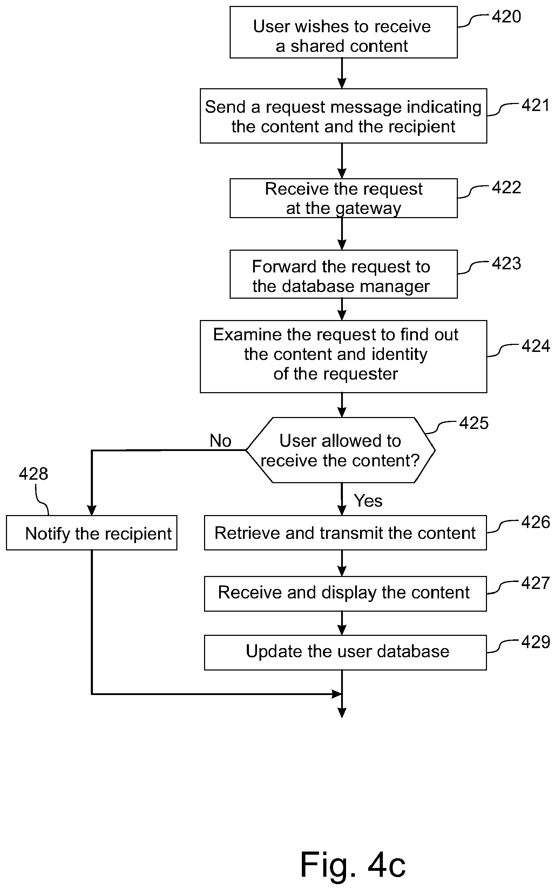

In the following, some examples will be provided on the utilization of the unique code by one or more users with reference to the flow diagrams of Figs. 4a-4c and Figs. 2 and 3. Fig. 2 illustrates an example of a system for digital content management and sharing on the basis of information obtained from physical products, in accordance with an embodiment. Fig. 3 shows a block diagram of a managing server 14, in accordance with an embodiment. Fig. 4a is a flow diagram of a method for obtaining access to a content on the basis of a code attached with a product, in accordance with an embodiment, Fig. 4b is a flow diagram of a method for sharing a link to other user(s) for accessing a content, in accordance with an embodiment, and Fig. 4c is a flow diagram of a method for accessing a content by another user on the basis of a shared link from a user, in accordance with an embodiment.

A user inspects 401 a product 7 at a shop and considers whether to buy the product or not and examines where the unique code 5 can be found. The user uses her/his communication device 20 to capture 402 an image of the unique code. The communication device 20 may comprise an image recognition circuitry 21, such as a camera, and/or an application which uses e.g. an image recognition techniques to find out the location of the unique code and interprets 403 the code on the basis of the visual information of the code. For example, if the unique code is printed as a QR code, the visual information of the QR code can be decoded and an information element can be formed which comprises the decoded information. This information element comprises, for example, a link such as an internet address, which indicates where the communication device 20 should transfer information related to the unique code.

In accordance with an embodiment, the captured image is transmitted by the communication device 20 to an image processing device which examines the image to find out the unique code and decode the code on the basis of the captured image and searches information of the link related to the unique code. Then the decoded unique code and the link can be transmitted to the communication device 20.

When the link has been revealed from the unique code, the user can select 404 an operation to be performed on the basis of the link. For example, the user may be interested in to find out more information about the product, watch a commercial related to the product, send information about the product to another user, etc. The communication device 20 forms 405 a request message in which information about the unique code, type of the request, indication of the user and/or the user's communication device and possible other information such as an indication of the purchase place is included. In addition to the indication of the user, the user related information to be included in the request message can comprise preference and/or authorizations of the user, gender, age, nationality, residence, etc. Such user related information is also called as a user profile in this specification. The request message is transmitted 406 via a communication network 22 to the location in the network which is indicated by the link. The location is, for example, a gateway server 23. The gateway server 23 is connected with the database manager 14 so that the gateway server 23 and the database manager 14 can interchange information.

In accordance with an embodiment, the system has a fixed network address where the communication device 20 sends the unique code, wherein the system may deliver the unique code and user's identification data to an entity in which that unique code is managed, if all unique codes are not handled by the same database manager 14.

The database manager 14 comprises a profile inspection block 141 which uses the user profile to find out 407 user related information from a user database 101. The user database 101 comprises information which kinds of rights to use content the user has, preferences of the user and possible other authentications given to the user. For example, the user may be allowed to fetch more information related to the product from the brand owner's web site and view this information an unlimited time. As another example, the user may be allowed to share the link with one or more friends. More examples of the authentications will be provided later in this specification.

The user database 101 may comprise for each (registered) user different sections of data for different manufacturers, brand owners etc. so that, for example, different brand owners may have granted the same user different kinds of rights. In this case all information related to the same user can be stored as one entity. Another option is to store user related information separately for each manufacturer, brand owner etc.

In the following, several different operation situations based on the type of the request will be described in more detail.

The terms content owner, brand owner and manufacturer may be used interchangeably but in some situations the content owner, brand owner and manufacturer may be different entities. The term content means a piece of information in a digital form which may be stored in a server, in a cloud, in a database, in a gateway and/or in another place in a data network such as the internet. It may even be possible to store sharable content in a user's device.

If the profile inspection block 141 determines 408 that the user have requested to utilize some content by her/himself, the profile inspection block 141 searches the user database 101 to find this user's data record in the user database 101. When found, the profile inspection block 141 examines 409 the user's data record to find data in the data record which is related to the brand owner of the product from which the unique code was scanned. If the data record reveals that the requested content can be transmitted to the requested user, the profile inspection block 141 indicates a data collection block 145 the content to be transmitted or a link to the content and information of the address of the user's device to which the content is to be transmitted. This address information is received, for example, in the request which the user has transmitted to the gateway server 22. In accordance with an embodiment, the user device's network address is stored in the gateway server 22, wherein the profile inspection block 141 needs not indicate it to the user's device but may only refer to the message in which the request was received.

The profile inspection block 141 or another entity in the database manager 14 may also examine the brand owner related information to determine whether the user record in the user database 101 should be updated 410 as a consequence that the user has fulfilled a predetermined criteria and what actions to take when any of the predetermined criteria is met. In accordance with an embodiment, such a predetermined criteria is purchase of the product, query of more content, request to share the content with one or more other users, etc. The action to be taken can be, for example, increase a level of the user to give the user more options to quality content, more time to use the content or any other type of advancement on a loyalty program, increase the number of other users the content can be shared with, etc. the database manager 14 may comprise a user data manager 144 for inserting, updating and deleting user related data to/from the user database 101.

The data collection block 145 provides the gathered content and information of the address of the user to which the content is to be transmitted to a transmitting block 146, which transmits 411 the content to a network element, such as the gateway server, an access point of a wireless communication network or another element capable of transmitting the content to the communication network. The communication network has means to deliver the content to the intended recipient, which in this example is the device of the user who requested the content.

When the content has been received by the device, it may be possible to store the content into the memory of the device. The device may have means for examining conditions related to the content, for example the length of time or the number of times the user is allowed to utilize the content. In accordance with an embodiment, the device may only playback (e.g. display) the content without storing the content to the device.

In accordance with an embodiment, the content is not transmitted in a reply message to the requesting device but a link to the content, wherein the requesting device may be use this link to get access to the requested content.

It should be noted here that, in addition to or instead of the above mentioned examples the accessed content may be a piece of video presentation provided by a brand owner or manufacturer of the product, or any information which the recipient might be interested in to get access, for example for watching, playing a game etc.

In accordance with an embodiment, the means for examining conditions related to the content may be located in the gateway or in the managing server, wherein the means for examining only allow transmission of the content to the recipient when the conditions allow or don't prevent utilization of the content. For example, if the user is only allowed to display the content a certain number of times, the means for examining count the number of times the user has ordered the content and when the maximum number has been achieved, the content is not transmitted anymore to the user's device.

If the profile inspection block 141 determines 412 that the user have requested to share some content with someone else (to one or more other users), the profile inspection block 141 searches 413 (Fig. 4b) the user database 101 to find this user's data record in the user database 101. When found, the profile inspection block 141 examines 414 the user's data record to find data in the data record which is related to the brand owner of the product from which the unique code was scanned. If the data record reveals that the requested content can be transmitted to the other user(s) for sharing, the profile inspection block 141 indicates to a data collection block 145 the content to be transmitted and information of the address(es) of the user(s) to which the content is to be transmitted. This address information is received, for example, in the request message which the user has transmitted to the gateway server 22.

In accordance with an embodiment, the link to the content is sent to the user's device and the user's device can forward the link to one or more recipients with which the content is intended to be shared with. Hence, when the recipient wishes to get access to the content, the recipient's device may send a message including the link to the gateway server 23 in which the right to get access to the content by the recipient may be examined and information of the recipient may be added to the user database 101 or if information of the recipient already exists in the user database 101, the user information may be updated (e.g. that the recipient has accessed the content).

In accordance with an embodiment, the forwarding user's device may also include indication of the forwarding user with the message and this indication will also be sent to the gateway 23 together with the link so that the gateway 23 may assure that the link is originated by the forwarding user and not by a fraudulent user.

In accordance with an embodiment, the gateway or another entity may also check that the link is addressing a content for which the provider of the content is entitled to share, for example the provider has itself prepared the content or has obtained a license or a copyright to the content.

The system may comprise a security element 147, for example in the gateway server 23, which may perform operations to avoid or detect attempts of unauthorized access to a content. For example, the security element 147 may calculate a digital certificate on the basis of the data of messages delivered between the gateway server 23 and the devices requesting the content. The digital certificate may then be transmitted with the message and a receiving device may calculate a reconstructed digital certificate and examine whether the digital certificate received in the message and the reconstructed digital certificate correspond with each other. If so, the receiving device may deduce that the message has not been tampered with. Respectively, messages transmitted from users devices can be attached with a digital certificate and the gateway server 23 may calculate a reconstructed digital certificate and examine whether the digital certificate received in the message and the reconstructed digital certificate correspond with each other. If so, the gateway server 23 may deduce that the message has not been tampered with.

Details of an algorithm/algorithms used to calculate the digital certificate (and the reconstructed digital certificate) may not be publicly available so that a fraudulent user could not form valid digital certificates.

The profile inspection block 141 or an access control 140 may examine 415 with respect to each of the indicated recipients whether they really are allowed to receive the content and possible conditions and/or restrictions for utilization of the content. For example, some of the users may have larger rights for the content than other users. Examples of this will be explained later in this specification.

The profile inspection block 141 or another entity in the database manager 14 may also examine the brand owner related information to determine whether the user record in the user database 101 should be updated 416 as a consequence that the user has fulfilled a predetermined criteria and what actions to take when any of the predetermined criteria is met. For example, because the user wants to share the content, the level of the user may be increased by an amount which may depend on the number of other users the content is shared.

The profile inspection block 141 or other entity may also attach information of the recipients of the shared content to the sharing user's profile data. For example, identities of the recipients, number of shared content to each recipient can be stored.

The data collection block 145 provides 417 the gathered content and information of the addresses of the one or more other users to which the content is to be transmitted to a transmitting block 146. Transmitting 418 of the content may be performed in the same way than described above on the basis of the indicated addresses.

When the content has been received by the device(s) of the other user(s), it can be stored and displayed 419 to the users.

In accordance with an embodiment, the above described push mechanism is not used but the other users are informed of the sharable content by a message in which an address of the content is included. Fig. 4c illustrates an example of the content access by other recipient using a so-called pull principle. When the recipient wishes 420 to see the content, the recipient sends 421 by the recipients communication device a content request message to get the content. The content request message indicates the content and the identity of the recipient and possibly also the identity of the user who initiated the sharing of the content. The request message is received 422 by the gateway server 23 and provided 423 to the database manager 14. The database manager 14 examines 424 information included in the message to find out the content requested and information of the requester. The database manager 14 also examines 425 whether the request can be fulfilled. If so, the content is gathered and transmitted 426 to the requester where the content can be received and displayed 427. If the request cannot be fulfilled, a notification may be transmitted 428 to the requester.

If the request can be fulfilled, the database manager 14 may also update 429 the user database so that, for example, the number of shares is increased in the data of the user who initially shared the link to the content.

In the simplified block diagram of Fig. 3 of the managing server 14 there is a processor 150 which controls the operation of the managing server 14. There is also a memory 151 in which computer code and at least some of variable data and parameters may be stored. Fig. 3 also illustrates that certain operational entities of the managing server 14 are implemented as computer code (software) but they may also be implemented as hardware circuitry or a combination of hardware and computer code. The managing server 14 of Fig. 3 also has a communication circuitry 152 for communicating with, for example, the gateway server 23. The code database 100 and the user database 101 are shown as belonging to the managing server 14 but in practical implementations they need not be in the managing server 14 but may be separate from it, for example implemented as a so-called cloud service.

In accordance with an embodiment, right to utilize and/or share the content may require that the user buys the product first, i.e. permission to use the content is activated when the product has been bought. Some other alternative or additional conditions to be mentioned in this context may be a location where the content is bought, that the purchase is made in a particular shop, date, time of day, certain weekday(s), etc. It may also be possible to prevent content utilization at a certain geographical location(s), in a particular shop, date, time of day, certain weekday(s), etc.

The user who have bought the product, may scan the unique machine readable code and get access to the digital content on the physical product. The user may share the link related to the content with other users via, for example, Whatsapp, Facebook Messenger, Instagram, Snapchat, WeChat or any other type of social/messaging application.

There may be many kinds of conditions to restrict access to content by the system described above. For example, the system can determine how long time a user can use the content and how many other users the user can share the content with. The right to use the content can be the same for each user or it can be pre-defined by the content owner. For example, the user who first scanned the code may have right to use the content as long as he/she wants, a second user (the first receiver of the shared content) may have time-limited access for a first amount of time (e.g. 5 min), a third user (the second receiver of the shared content) may have time-limited access for a second amount of time (shorter than the first amount of time, e.g. 2.5 min), a fourth user (the third receiver of the shared content) may have further time-limited access for a third amount of time (shorter than the first and second amount of time e.g. 1 min) and so on. The right to use the content can also vary depending on the users location, time of day, age of the user, current weather, sport event results or any other publicly available data point.

In accordance with an embodiment, when the unique code is scanned, information of the scanning and the unique code is transmitted to the gateway and delivered further to the brand owner. It may also be possible to send information of the location where the code was scanned to the brand owner. Hence, the brand owner may change the level of that particular user by some location based criteria. As an example, if the user has scanned the unique code of the same product or the same product family (e.g. certain drinks), the brand owner may upgrade the user's level.

In accordance with an embodiment, users register to the system before they are allowed to use it. In accordance with another embodiment, the users can register to the system when they first scan a unique code from a product. In the registration phase some user specific information is provided to the system and the system selects a unique user identification (a.k.a. a user ID) for each registered user to distinguish users from other users and to identify the user who is trying to use and/or share a content.

In accordance with an embodiment, users may obtain information about her/his user profile etc. The brand owner may decide which user profile related information the user is allowed to receive, such as cities visited/not visited.

In accordance with an embodiment, users may obtain nutrition information about the product, carbon footprint of products bought, information where information of the user's own identity has been delivered (e.g. friends).

In accordance with an embodiment, brand owners can obtain information of place of purchase of the brand owner's products and who has bought the product(s) on the basis of user's identifier and/or an address information of the device the user has used when scanning the unique code(s).

The quality and access time of the shared content can also depend on the "level" of the user. User can gain access to more quality content and/or usage time for example by buying and scanning more of the brand/content owners products. The level of the user may also be gained by sharing the content i.e. the amount of shares raises the level of the user to give the user more options to quality content, more time to use the content or any other type of advancement on a loyalty program.

In accordance with an embodiment, the level of the user who shared the link may also be raised when the receiver of the link utilized the link.

In accordance with an embodiment, the receiver of the link may be assigned some or even all the privileges of the user who shared the link, when the receiver utilizes the link. In other words, the receiver need not start from a bottom level to get more utilization options. This kind of operation may be brand owner (i.e. content provider) specific i.e. the same user may receive the originating user's level when gaining access to one brand owner's content but receives only a basic level when gaining access to another brand owner's content.

The unique ID on the product can be managed to give the user access to the content only once and the shared links for the content can also be restricted by time or by access to the content. The content can be managed so that the link for the content expires, for example, 20 seconds after opening and can't be used after that.

The user can consume the content using a mobile device, a tablet, a laptop, a computer, a television, an augmented reality device, a virtual reality device or any other device that can reproduce (e.g. display) digital content. Each device has a unique identifier wherein that identifier may also be utilized to distinguish user's different devices. Such unique identifier of the device may be an IP address (Internet Protocol), an IMEI code (International Mobile Equipment Identity), a MAC address (Media Access Control), etc.

In accordance with an embodiment, the system may also utilize so-called cookies, which are stored in the device when the user has watched a certain web page by the device.

## Claims

1. A method for digital content management and sharing, the method comprising:
receiving from a communication device a request comprising information related to a product, a requesting consumer, and a requested operation, wherein the information related to the product is obtained on the basis of a machine readable code associated with the product;
examining the received information to determine whether the requested operation is permissible for the requesting consumer; and
if the examination reveals that the requested operation is permissible for the requesting consumer, the method further comprises at least the following:
if the requested operation is for a targeting consumer, the method further comprises:
determining at least one condition for performing the requested operation by the targeting consumer;
creating an initiating message;
including the at least one condition to the initiating message; and
sending the initiating message to a communication device of the targeting consumer to initiate the requested operation; or
if the requested operation is for the requesting consumer, the method further comprises:
determining at least one condition for performing the requested operation by the requesting consumer;
creating a response message;
including a link for performing the requested operation to the response message; and
sending the response message to a communication device of the requesting consumer.

2. The method according to claim 1, **characterized in that** the method comprises:
receiving an image captured from the machine readable code; and
interpreting the captured image to decode the unique code on the basis of the captured image information.

3. The method according to claim 1 or 2, **characterized in that** the method comprises:
examining user related information on the basis of the identity of the requesting consumer;
determining on which conditions the request can be fulfilled; and
fulfilling the request if at least one condition is met.

4. The method according to claim 1, 2 or 3, **characterized in that** the requesting consumer and the targeting consumer are the same.

5. The method according to any of the claims 1 to 4, **characterized in that** the method comprises:
determining that the requested operation is getting access to a content; and
including the content or a link to the content to the response message.

6. The method according to claim 5, **characterized in that** the method comprises:
receiving a request from the communication device of the targeting consumer to initiate the requested operation;
examining on the basis of the identity of the targeting consumer whether the requested operation can be initiated; and
if the examining reveals that the requested operation can be initiated, transmitting the content or the link to the content to the communication device of the targeting consumer.

7. The method according to any of the claims 1 to 6, **characterized in that** the method comprises:
sending the response message to the communication device of the requesting consumer; and
forwarding the response message to the communication device of the targeting consumer.

8. An apparatus comprising:
means for receiving from a communication device a request comprising information related to a product, a consumer and a requested operation, wherein the information related to the product is obtained on the basis of a machine readable code associated with the product;
means for examining the received information to determine whether the requested operation is permissible for the consumer; and
means for initiating the requested operation if the examination reveals that the requested operation is permissible for the consumer, wherein the means for initiating the requested operation are configured to:
determine at least one condition for performing the requested operation by the targeting consumer;
create an initiating message;
include the at least one condition to the initiating message; and
send the initiating message to a communication device of the targeting consumer to initiate the requested operation.

9. The apparatus according to claim 8, **characterized in that** the apparatus comprises:
means for receiving an image captured from the machine readable code; and
means for interpreting the captured image to decode the unique code on the basis of the captured image information.

10. The apparatus according to claim 8 or 9, **characterized in that** the apparatus comprises:
means for examining user related information on the basis of the identity of the requesting consumer;
means for determining on which conditions the request can be fulfilled; and
means for fulfilling the request if at least one condition is met.

11. The apparatus according to any of the claims 8 to 10, **characterized in that** the apparatus is configured to:
determine that the requested operation is getting access to a content; and
include the content or a link to the content to the response message.

12. The apparatus according to claim 11, **characterized in that** the apparatus comprises:
means for receiving a request from the communication device of the targeting consumer to initiate the requested operation;
means for examining on the basis of the identity of the targeting consumer whether the requested operation can be initiated; and
means for transmitting the content or the link to the content to the communication device of the targeting consumer, if the examining reveals that the requested operation can be initiated.

13. The apparatus according to any of the claims 8 to 12, **characterized in that** the apparatus is configured to:
send the response message to the communication device of the requesting consumer; and
forward the response message to the communication device of the targeting consumer.

14. An apparatus comprising a processor and a memory, said memory comprising computer code when executed by the processor cause an apparatus at least to perform:
receive from a communication device a request comprising information related to a product, a requesting consumer and a requested operation, wherein the information related to the product is obtained on the basis of a machine readable code associated with the product;
examine the received information to determine whether the requested operation is permissible for the requesting consumer; and
initiate the requested operation if the examination reveals that the requested operation is permissible for the consumer, wherein said memory further comprises computer code when executed by the processor causes an apparatus to initiate the requested operation by:
determining, if the requested operation is for a targeting consumer, wherein the computer code when executed by the processor causes the apparatus to:
determine at least one condition for performing the requested operation by the targeting consumer;
create an initiating message;
include the at least one condition to the initiating message; and
sendi the initiating message to a communication device of the targeting consumer to initiate the requested operation; or
determining, if the requested operation is for the requesting consumer, wherein the computer code when executed by the processor causes the apparatus to:
determine at least one condition for performing the requested operation by the requesting consumer;
create a response message;
include a link for performing the requested operation to the response message; and
send the response message to a communication device of the requesting consumer.

15. A computer program product for digital content management and sharing comprising computer code when executed by a processor cause an apparatus at least to perform:
receive from a communication device a request comprising information related to a product, a consumer and a requested operation, wherein the information related to the product is obtained on the basis of a machine readable code associated with the product;
examine the received information to determine whether the requested operation is permissible for the consumer; and
initiate the requested operation if the examination reveals that the requested operation is permissible for the consumer, wherein the computer program product further comprises computer code when executed by the processor causes an apparatus to initiate the requested operation by:
determining, if the requested operation is for a targeting consumer, wherein the computer code when executed by the processor causes the apparatus to:
determine at least one condition for performing the requested operation by the targeting consumer;
create an initiating message;
include the at least one condition to the initiating message; and
send the initiating message to a communication device of the targeting consumer to initiate the requested operation; or
determining, if the requested operation is for the requesting consumer, wherein the computer code when executed by the processor causes the apparatus to:
determine at least one condition for performing the requested operation by the requesting consumer;
create a response message;
include a link for performing the requested operation to the response message; and
send the response message to a communication device of the requesting consumer.

16. A managing server for digital content management and sharing comprising:
means for receiving from a communication device a request comprising information related to a product, a requesting consumer, and a requested operation, wherein the information related to the product is obtained on the basis of a machine readable code associated with the product;
means for examining the received information to determine whether the requested operation is permissible for the requesting consumer; and
means for initiating the requested operation if the examination reveals that the requested operation is permissible for the requesting consumer, wherein the means for initiating the requested operation are configured to:
determine, if the requested operation is for a targeting consumer, wherein the managing server is configured to:
determine at least one condition for performing the requested operation by the targeting consumer;
create an initiating message;
include the at least one condition to the initiating message; and
send the initiating message to a communication device of the targeting consumer to initiate the requested operation, or
determine, if the requested operation is for the requesting consumer, wherein the managing server is configured to:
determine at least one condition for performing the requested operation by the requesting consumer;
create a response message;
include a link for performing the requested operation to the response message; and
send the response message to a communication device of the requesting consumer.
